# EUROPEAN PATENT APPLICATION

(11) **EP 4 067 439 A1**
(43) Date of publication of application: **05.10.2022**
(21) Application number: 20891827.6
(22) Date of filing: 27.11.2020
(51) Int. Cl.: C09B 67/08

(54) **COMPOSITION OF PIGMENTS, ANILINES OR COLOUR ENHANCERS IN THE FORM OF CAPSULES COMPRISING SURFACTANTS, HUMECTANTS AND ADDITIVES, FOR DELAYED DISSOLUTION IN AQUEOUS MEDIUM OR IN VARIOUS SOLVENTS**

(30) Priority: 29.11.2019 BR 102019025250
(71) Applicant: Sparen Consultoria Ltda Me, 88960-000 Sombrio - SC (BR)
(72) Inventor: DOS SANTOS LUCIANO, Geisi, 89084-770 Indaial - SC (BR)
(74) Representative: Tiburzi, Andrea
(86) International application number: PCT/BR2020/050506
(87) International publication number: WO 2021/102549

(57) **Abstract**

In general, this invention belongs to the technological sector for dyes, pigments, anilines, and color boosters, extending dissolution time in an aqueous medium or diverse solvents in dissolution and use, activated by heat, pressure, or additives for color boosting in industrial processes, more specifically, micro-encapsulation processes that may be chemical processes: coacervation; polymer-polymer incompatibility; interfacial polymerization at liquid interfaces, *in situ* polymerization; solvent evaporation; or extrusion with submerged nozzle. A textile process where color is inserted at any step in the process. This will drastically lessen polluted wastes generated by the textile industry. This technique could be used in other sectors of the coloring and use industries.

## Description

### Technology Field of the Invention

This relates to an invention covering a group of industries that are interrelated in such a way as to constitute a single inventive concept: the encapsulation of first-use colorants, pigments, anilines, and color boosters for delaying dissolution in solvents. This will provide the user with a cleaner means of use, less wastes and air pollutants, with less contamination of waste treatment stations, and better-performing functionality.

Dyes are major pollutants in the textile industry, and elsewhere. One reason is because only a portion remains anchored in the fiber - which is one of their purposes - during their application. With the invention addressed by this proceeding, there is a possibility of improvement by anchoring up to 100% of dye used, lowering costs, waste generation, and contaminants.

### Known State of the Art

To date, there is no knowledge of anchorage improvements through dye encapsulation (or quenching); instead, only means with additions of additives, are known, as well as processes or high temperatures for enhancing anchorage, and then still generating chemical wastes or sludge that are often dumped untreated and without recycling, stored around treatment station boundaries or sent to landfills. Some projects for recycling this sludge are being worked on by the author of this invention.

These techniques cause operational problems, such as the need for space to store the dyes that are used on a large scale in plants for generating color; commercial issues arise due to high inventory costs, during handling, they release particles of dyes, pigments, anilines, and color boosters into the atmosphere, causing much inconvenience for their handlers and at handling locations; the wastes cause environmental problems at the landfills where they are disposed of; environmental problems, such as the bad smell of the wastes, which do not decompose, turning into a spongy sludge after a few years that seeps out of the landfill and causes soil contamination, making it inoperable.

### Novelty, and Purposes of the Invention

The invention is an improvement on dyes already formed widely in the world. However, it is well known that the textile industry has a specific characteristic of lacking efficiency of applicability. The purpose of this proceeding is to expand the solution by reducing or eliminating these colorgenerating wastes for any industry at different stages of the process and the useful life of the products. This constitutes the novelty of this process for organic or synthetic, reactive, or direct solid dyes, pigments, anilines, or color boosters from various sources and in different forms.

In the improved product described herein, up to 100% of dyes, pigments, anilines, or formulated color boosters are recycled back into the processes where they are used, with an anchoring level of up to 100%, that is improving the entire current situation of existing and sold dyes.

### Detailed Description of the Invention

The encapsulation of dyes, pigments, anilines, and color boosters for delaying their aqueous dissolution or through various solvents is intended to extend the time needed for them to dissolve in aqueous media and for the total dissolution and use, activated by heat, pressure, or color-boosting additives in industrial processes. More specifically, for a textile process, where the color is inserted at any step in the process, drastically decreasing contaminant wastes generated by the textile industry.

In general, there are many ways of handling the dye encapsulation or quenching process. However, this novel invention paves the way to sweeping changes in how they will be handled at the industrial scale.

This invention refers to encapsulated dyes, pigments, anilines, color boosters or mixtures thereof.

It will be mainly surfactants, wetting agents, and additives that are added to delay dissolution in solvents.

In a preferred embodiment, the additives are selected from among organic, inorganic, hydrocarbons or mixtures thereof.

The term encapsulation means 'small box'. Basically, encapsulation consists of isolation from the surrounding environment for a defined length of time, by a barrier material, a chemical, or biological molecule, or a solid, liquid, or gaseous particle. The difference between encapsulation, micro-encapsulation, and nano-encapsulation lies in the size of the capsule.

The dissolution of this encapsulation or quenching will be activated by heat, pressure, or the introduction of additives. Until activation, it must not react with the medium, thus ensuring easy handling before the use and benefits from their inclusion when the reaction requires the dyes, pigments, anilines, or color boosters, enhancing its stability and consequently its performance; allowing progressive and controlled release.

In a preferred embodiment, the release is either immediate (primary system) or in two phases (binary system).

In a primary system, the dye, pigment, or colorant is easily dissolved through contact with the appropriate solvent. In the binary system, for example, the release of the dye, pigment, or color booster will begin only with pressure, heat, or the introduction of additives. Consequently, a variety of elements may be used to prolong (or change) a desired effect on the dye, pigment, or color booster. Encapsulation allows the dye, pigment, or color booster to reach the right place at the right time in the selected process.

The final dye, pigment, or colorant resulting from this mixture is used in full, added to the direct formulation at the time of dyeing or industrial use. In other words, the dye, pigment, or color booster becomes a product to be added directly to the process already underway, but without the waste that occurs today.

The encapsulated matter comprises substances with characteristics that are suitable for their end-purpose of encapsulating or quenching with or without nano-molecules, but with specific affinities with the medium to be introduced.

These additives turn the dyes, pigments, anilines, or color boosters into highly profitable products.

This makes the process less costly and less polluting. When applied to controlled release, the term micro-particles is broad and refers to two types of structures: micro-spheres and micro-capsules.

Spheres are systems where the active agent is homogeneously dispersed or solubilized in a polymeric matrix. This results in a monolithic system, where it is not possible to identify a differentiated core.

In contrast, micro-capsules constitute the so-called reservoir type systems, where a differentiated core may be identified, either solid or liquid. In this case, the substance is surrounded by a membrane, generally polymeric, isolating the core from the surrounding environment. The core material may consist of small solid particles, liquid droplets, or quantities of gas that are coated by a film or membrane during the encapsulation process.

Capsules may also have a double shell, with each part having different solubility characteristics. The encapsulated substance can be released by mechanical action, namely: when the shells rupture under pressure, or due to physical and chemical variations in the temperature or pH of the medium in which they are located, acting on the membrane. The material that composes the shell is selected on the basis of the physical and chemical properties of the core and the intended application. This generally consists of natural or synthetic polymers.

Micro-encapsulation techniques and processes span several distinct scientific areas, including colloid chemistry, physical chemistry, polymer and materials chemistry, and also suspension and drying technologies.

Micro-encapsulation processes may be classified into chemical and mechanical, namely: - chemical processes: coacervation; polymer-polymer incompatibility; interfacial polymerization at liquid interfaces; *in situ* polymerization; solvent evaporation; submerged nozzle extrusion.

All encapsulation/micro-encapsulation processes known to a person versed in the art may be applied within the scope of this invention.

In a preferred embodiment, the encapsulated or quenched matter described herein will also have antimicrobial action.

In a preferred embodiment, the encapsulated or quenched dyes, pigments, anilines, and color boosters described herein are for use in the textile sector.

In a still more preferred embodiment, the encapsulated or quenched dyes, pigments, anilines, and color boosters described herein are for use as raw knit equalizers.

This Specification describes an invention with Industrial Applicability, Novelty, and an Inventive Step, complying with all the requirements established by law for receiving the claimed privilege.

## Claims

1. Dyes, pigments, anilines, or color boosters, **characterized in that** they are as set forth in one encapsulated or quenched product, comprising surfactants, wetting agents, and additives.

2. Dyes, pigments, anilines, or color boosters, according to Claim 1, **characterized in that** the encapsulate or quenched product has a progressive and controlled release.

3. Dyes, pigments, anilines, or color boosters, according to Claims 1 or 2, **characterized in that** they have an immediate or two-phase release system.

4. Dyes, pigments, anilines, or color boosters, according to any one of Claims 1 to 3, **characterized in that** the encapsulated or quenched product releases the dyes, pigments, anilines, or color boosters only when activated.

5. Dyes, pigments, anilines, or color boosters, according to Claim 4, **characterized in that** the activation is by means of heat, pressure, or the introduction of additives.

6. Dyes, pigments, anilines, or color boosters, according to any one of Claims 1 to 5, **characterized in that** they are for use in the textile industry.

7. Use of encapsulated or quenched dyes, pigments, anilines, or color boosters, as defined in either of Claims 1 or 6, **characterized in that** it is in the textile industry.
